# EUROPÄISCHE PATENTSCHRIFT

(11) **EP 1 938 154 B1**
(45) Veröffentlichungstag und Bekanntmachung des Hinweises auf die Patenterteilung: **13.09.2017**
(21) Anmeldenummer: 06806800.6
(22) Anmeldetag: 22.09.2006
(51) Int. Cl.: G05D 1/02

(54) **SELBSTTÄTIG VERFAHRBARES BODENSTAUB-AUFSAMMELGERÄT**
AUTOMATICALLY DISPLACEABLE FLOOR-DUST COLLECTOR
APPAREIL DE COLLECTE DE LA POUSSIÈRE AU SOL À DÉPLACEMENT AUTONOME

(30) Priorität: 29.09.2005 DE 102005046639
(43) Veröffentlichungstag der Anmeldung: 02.07.2008
(73) Patentinhaber: Vorwerk & Co. Interholding GmbH, 42275 Wuppertal (DE)
(72) Erfinder: LANG, Torsten, 42657 Solingen (DE); SOMMER, Jörg, 50737 Köln (DE); SCHLISCHKA, Patrick, 42369 Wuppertal (DE)
(74) Vertreter: Rieder, Hans-Joachim
(86) Internationale Anmeldenummer: PCT/EP2006/066640
(87) Internationale Veröffentlichungsnummer: WO 2007/036490

(56) Entgegenhaltungen:
- WO-A-2005/083541
- WO-A2-2005/055796
- US-A1- 2003 060 928

## Beschreibung

Die Erfindung betrifft ein selbsttätig verfahrbares Bodenstaub-Aufsammelgerät mit einem elektromotrischen Antrieb, einem Staubsammelbehälter und einer Abdeckhaube, wobei das Aufsammelgerät ein oder mehrere angetriebene Verfahrräder und ein nicht angetriebenes, mitlaufendes Passivrad aufweist, wobei weiter Korrektur-Maßnahmen zur Rückgewinnung der freien Beweglichkeit des Aufsammelgerätes auslösbar sind, im Falle, dass eine Bewegungshinderung des Aufsammelgerätes von diesem erkannt wird.

Bodenstaub-Aufsammelgeräte der in Rede stehenden Art sind bekannt. Diese reinigen selbständig und ohne Hilfestellung in üblichen Wohnungen gegebenenfalls unterschiedliche und wechselnde Bodenbeläge durch Kehren und gegebenenfalls weiter durch Saugen. Diese Aufsammelgeräte passen sich der variablen Bodenhöhe (Teppich, Hartboden und deren Übergänge) an. So wird beispielsweise auf die DE 102 42 257 A1 verwiesen. Um die Mobilität und damit die Arbeitsfähigkeit zu erhalten, darf sich ein Aufsammelgerät der in Rede stehenden Art nicht an Hindernissen festfahren. Grundsätzlich kann sich dieses Gerät durch ungeeignete Verhaltensstrategien oder durch mechanisches Verklemmen festfahren, wobei mechanisches Verklemmen in Form des Auffahrens auf flache Hindernisse oder durch Unterfahren bspw. unter Schränke oder Heizungskörper auftreten kann. Diesbezüglich sind Lösungen bekannt, bei welchen ein Auffahren weitestgehend durch ein gefedertes Fahrwerk verhindert wird. Bei kontinuierlich ansteigenden Hindernissen wie Lampenfüßen oder Stahlrohrstühlen mit umlaufendem Schwingrohr verfahren sich jedoch diese bekannten Aufsammelgeräte fest und schalten ab. Zum Schutz gegen Unterfahren ist es bekannt Ultraschall-Abstandssensoren vorzusehen, welche die Hindernisse bereits aus der Distanz erkennen. Diese Sensorik versagt jedoch bei sehr schmalen Stegen, wie beispielsweise Halterungen von Heizkörpern. Wird ein Hindernis nicht über die Sensorik erkannt, kann sich das Aufsammelgerät unter diesem Hindernis festklemmen. Ein Auffahren bzw. Unterfahren hat zunächst zur Folge, dass der Reinigungsfortgang nicht fortgesetzt werden kann. Das Festfahren wird bei den bekannten Geräten nicht erkannt, so dass vorgesehene Reinigungsbürsten weiter in Betrieb sind, dass heißt, weiter drehen ohne dass sich der Roboter bewegt. Somit sind Bodenschädigungen und gegebenenfalls Schädigungen des Aufsammelgerätes zu erwarten. Aus der WO 2005/083541 A ist ein selbsttätig verfahrbares Bodenstaub-Aufsammelgerät bekannt, das einen Sensor aufweist, der feststellt, ob ein Rad nach unten ausweicht. Dies kann eintreten, wenn das Gerät auf einer Stufe einer Treppe fährt und teilweise überkragt.

Ausgehend von dem zuletzt genannten Stand der Technik beschäftigt sich die Erfindung mit der Aufgbenstellung, ein Bodenstaub-Aufsammelgerät so auszugestalten, dass grundsätzlich seine Mobilität erhalten bleibt.

Diese Aufgabe ist beim Gegenstand des Anspruches 1 gelöst, wobei darauf abgestellt ist, dass das Passivrad hinsichtlich seiner Bewegung überwacht wird zur möglichen Einleitung einer Korrektur-Maßnahme bei einer Unterschreitung einer vorgegebenen Grenzgeschwindigkeit, wobei die Korrektur-Maßnahme sein kann, dass das Bodenstaub-Aufsammelgerät zunächst die Fahrt stoppt und hiernach einen geeigneten Befreiungsalgorithmus startet oder eine Umkehr des Fahrmanövers, welches zum Festfahren geführt hat, durchführt oder ein Freischaukeln, etwa durchalternierende Drehungen und Fahrbewegungen, durchführt oder ein Anheben des Aufsammelgerätes bei einem Auffahren bzw. ein Absenken des Aufsammelgerätes bei einem Unterfahren durchführt. Zufolge dieser Ausgestaltung wird einem Festfahren durch Auffahren bzw. Unterfahren eines Hindernisses entgegengewirkt. Der Zustand "Festgefahren" wird frühzeitig und zuverlässig erkannt, so dass eine Maßnahme zur Rückgewinnung der freien Beweglichkeit des Aufsammelgerätes auslösbar ist. Eine solche Maßnahme kann sein, wie auch im Anspruch 1 ausgeführt, dass das Bodenstaub-Aufsammelgerät zunächst die Fahrt stoppt und hiernach einen geeigneten Befreiungsalgorithmus startet. Hierdurch bleibt dessen Mobilität erhalten.

Die Erhaltung der Mobilität ist Voraussetzung für das vollständige Befahren einer Fläche und das zuverlässige Zurückfinden zur Basisstation, an welcher ein Wiederaufladen eines in dem Aufsammelgerät gegebenenfalls vorgesehenen Akkumulators und darüber hinaus gegebenenfalls auch das Entleeren des Aufsammelgerätes erfolgt.

Weitere mögliche Maßnahmen zur Rückgewinnung der freien Beweglichkeit des Aufsammelgerätes, wie auch im Anspruch 1 enthalten, können in einer Umkehr des Fahrmanövers, welches zum Festfahren geführt hat, bestehen. Weiter alternativ kann auch ein Freischaukeln als Maßnahme greifen, so durch alternierende Drehungen und Fahrbewegungen. Darüber hinaus ist als Maßnahme auch ein Anheben des Aufsammelgerätes bei einem Auffahren bzw. ein Absenken des Aufsammelgerätes bei einem Unterfahren denkbar.

Zur Gewährleistung einer statisch bestimmten Auflage des Bodenstaub-Aufsammelgerätes auf einer Ebene sind drei Auflagepunkte erforderlich. In der Regel sind dies zwei angetriebene Verfahrräder und ein nicht angetriebenes, mitlaufendes Passivrad. Die Drehung der Verfahrräder wird kontinuierlich durch Infrarot- oder Hallsensoren überwacht. Fährt das Aufsammelgerät auf ein Hindernis auf, so kann der Fall auftreten, dass sich die Verfahrräder weiter drehen ohne eine Vorwärtsbewegung des Aufsammelgerätes zu bewirken. Das nicht angetriebene, mitlaufende Passivrad dreht sich hingegen nur dann, wenn sich das Aufsammelgerät vorwärts oder rückwärts bewegt. Fährt das Aufsammelgerät unter ein Hindernis und klemmt dort fest, so kann dies auch zu einem Blockieren der Verfahrräder führen. Das Passivrad wird auch in diesem Fall still stehen.

Durch die erfindungsgemäße Ausgestaltung wird durch eine geeignete Sensorik die Drehung des Passivrades überwacht. Unterschreitet die Drehgeschwindigkeit des Passivrades eine durch Anzahl und Anordnung der Sensoren sowie durch eine elektrische Schaltung vorgegebene Grenzgeschwindigkeit, so wird davon ausgegangen, dass sich das Aufsammelgerät festgefahren hat. Ausnahmen bilden hierbei die Ereignisse "Start" und "Drehung links oder rechts", in welchen auch keine Drehung des Passivrades zu erwarten ist. Diese Ausnahmeereignisse werden durch eine entsprechende elektronische Schaltung erfasst, so dass ein Stillstand des Passivrades hierbei keinen Einfluss auf das Fahrverhalten des Aufsammelgerätes hat. Die Bewegung des Passivrades kann mechanisch, optisch oder auch magnetisch überwacht werden.
Bei der Überwachung der Drehung des Passivrades wird die Unterschreitung einer Mindestgeschwindigkeit erkannt. Dies kann durch umlaufende Signalgeber wie Magnete (bei Hallsensoren) oder Taktscheiben (bei Verwendung eines Licht-/Infrarotlichtstrahles) geschehen. Denkbar sind zum Beispiel magnetische Impulse, die von einem Hall-Sensor aufgenommen werden.

Nachstehend ist die Erfindung anhand der beigefügten Zeichnungen, welche lediglich zwei Ausführungsbeispiele darstellen, näher erläutert. Es zeigt:
- Fig. 1: eine perspektivische Unteransicht des erfindungsgemäßen Aufsammelgerätes;
- Fig. 2: einen Plan einer elektronischen Schaltung zur Erfassung und Auswertung der Drehgeschwindigkeit des Passivrades in einer ersten Ausführungsform;
- Fig. 3: eine elektronische Schaltung gemäß Figur 2, jedoch eine zweite Ausführungsform betreffend.

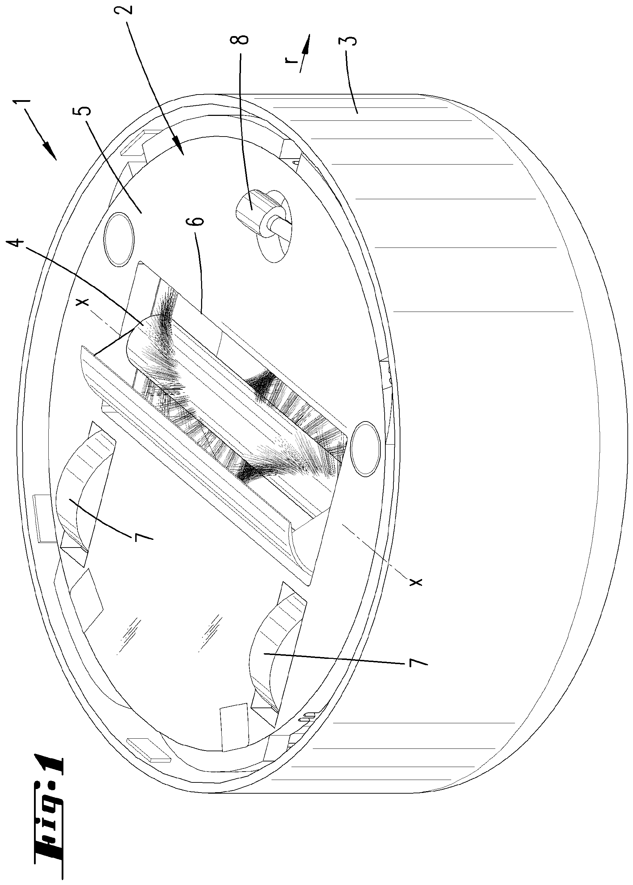

Dargestellt und beschrieben ist zunächst mit Bezug zu Figur 1 ein selbsttätig verfahrbares Bodenstaub-Aufsammelgerät 1 mit einem Chassis 2 und einer das Chassis 2 überdeckenden Abdeckhaube 3.

Das autonom arbeitende Aufsammelgerät 1 ist als Kehrgerät ausgebildet, wozu eine um eine Horizontalachse x drehbare Bürste 4 vorgesehen ist, welche in dem dargestellten Ausführungsbeispiel den Geräteboden 5 im Bereich eines Rechteckausschnittes 6 nach unten, dass heißt in Richtung auf den zu pflegenden Boden durchsetzt. Der Antrieb der Bürste 4 erfolgt über einen nicht dargestellten Elektromotor, welcher von einem, bezogen auf die übliche Verfahrrichtung r rückwärtigen Bereich angeordneten, gleichfalls nicht dargestellten Akkumulator gespeist wird.

Der mittels der Bürste 4 aufgesammelte Bodenstaub wird in einen rückwärtig angeordneten, nicht näher dargestellten Staubsammelbehälter geworfen.

Das Aufsammelgerät 1 weist zudem zwei, teilweise den Geräteboden 5 durchsetzende Verfahrräder 7 auf, wobei jedes Verfahrrad 7 über einen gesonderten Elektromotor angetrieben wird, womit neben dem üblichen, geradlinigen Verfahren des Gerätes 1 auch ein Drehen bzw. Wenden desselben ermöglicht ist.

Diese Verfahrräder 7 sind bezogen auf die übliche Verfahrrichtung r rückwärtig der Bürste 4 angeordnet. Wie weiter aus der Unteransicht in Figur 1 zu erkennen, ist in üblicher Verfahrrichtung r vor der Bürste 4 ein nicht angetriebenes, mitlaufendes Passivrad 8 vorgesehen, zufolge dessen das Bodenstaub-Aufsammelgerät 1 mittels der Verfahrräder 7 und des Passivrades 8 drei Auflagepunkte aufweist.

Bezüglich der weiteren, hier nicht näher beschriebenen Funktionsteile sowie des Arbeits- und Verfahrverhaltens des Bodenstaub-Aufsammelgerätes 1 wird auf die eingangs erwähnte DE 102 42 257 A1 verwiesen, deren Inhalt hiermit vollinhaltlich in die Offenbarung vorliegender Erfindung miteinbezogen wird, auch zu dem Zwecke, Merkmale dieser Patentanmeldung in Ansprüche vorliegender Erfindung mit einzubeziehen.

Um eine Bewegungshinderung des Aufsammelgerätes 1, beispielsweise ein Festfahren durch Auf- oder Unterfahren zu erkennen, wird das Passivrad 8 hinsichtlich seiner Bewegung überwacht. Diese Bewegungsüberwachung des Passivrades kann mechanisch, optisch oder auch magnetisch erfolgen.

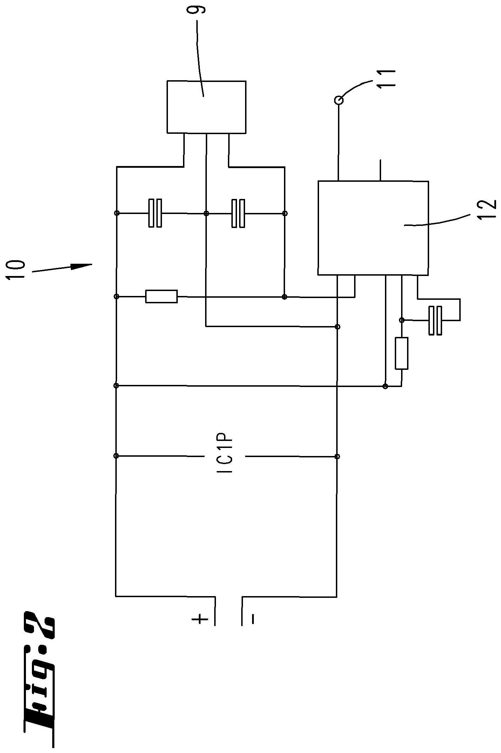

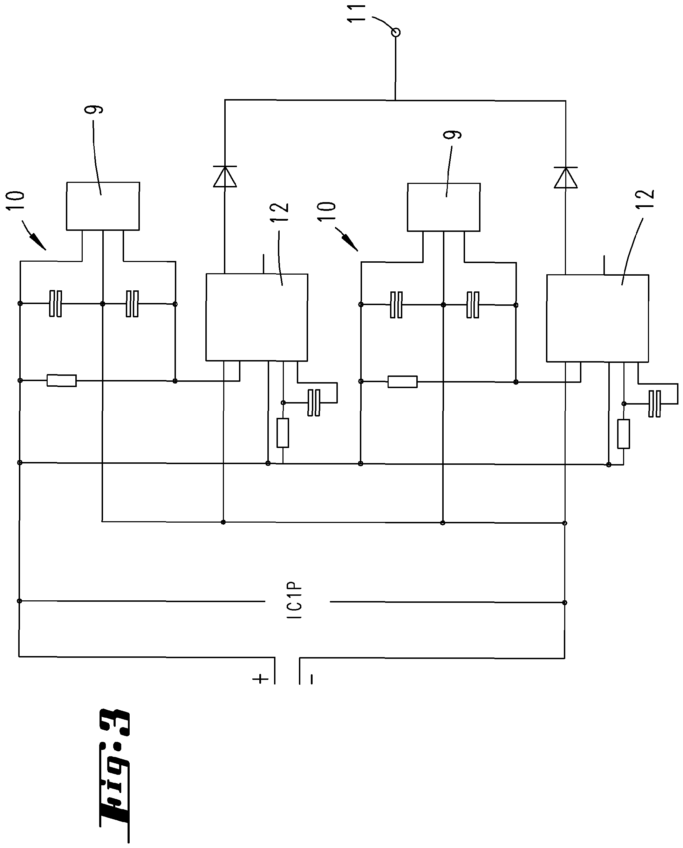

Anhand des in Figur 2 dargestellten elektronischen Schaltplans wird eine Überwachung mittels eines Hall-Sensors 9 beschrieben. Bei der Überwachung der Drehung des mitlaufenden, nicht angetriebenen Passivrades 8 kann die Unterschreitung einer Mindestgeschwindigkeit erkannt werden. Dies wird in dem dargestellten Ausführungsbeispiel durch umlaufende Signalgeber wie Magnete realisiert. Die magnetischen Impulse werden von dem Hall-Sensor 9 aufgenommen und auf den Triggereingang eines re-triggerbaren Monoflops 10 gegeben. Passiert ein in das Passivrad 8 integrierter Magnet den Hall-Sensor 9, schaltet dieser den Monoflop für eine über ein RC-Glied einstellbare Zeitspanne von LOW auf HIGH. Im normalen Fahrbetrieb ist diese Zeit so bemessen, dass der Magnet den Hall-Sensor 9 erneut passiert und somit das Monoflop 10 retriggert, bevor die Zeit abgelaufen ist. Geschieht dies nicht, signalisiert der Rückfall des Monoflops 10 auf LOW die Fehlfunktion. Das ausgewertete Signal wird über die Schnittstelle 11 an eine weitere Elektronik übergeben, zur möglichen Einleitung einer Korrekturmaßnahme. Denkbar ist hier auch die Anordnung mehrerer Magnete, die über den Umfang des Passivrades 8 gleichmäßig verteilt sind. Weiter ist wie in Figur 3 dargestellt auch die Anordnung mehrerer Hall-Sensoren 9 denkbar.

Mögliche Reaktionen des Aufsammelgerätes 1 zur Erhaltung seiner Mobilität können die Umkehr des Fahrmanövers, welches zum Festfahren geführt hat, das Freischaukeln durch alternierende Drehungen und Fahrbewegungen oder ein Anheben bei Auffahren oder Absenken bei Unterfahren des Aufsammelgerätes 1 sein.

Durch die erfindungsgemäße Ausgestaltung ist einem Festfahren des Aufsammelgerätes 1 entgegengewirkt. Das Auffahren auf ein Hindernis oder das Unterfahren unter ein Hindernis wird frühzeitig erkannt, so dass rechtzeitig eine Maßnahme zur Rückgewinnung bzw. zur Beibehaltung der freien Beweglichkeit des Aufnahmegerätes auslösbar ist.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Selbsttätig verfahrbares Bodenstaub-Aufsammelgerät (1) mit einem elektromotorischen Antrieb, einem Staubsammelbehälter und einer Abdeckhaube (3), wobei das Aufsammelgerät (1) ein oder mehrere angetriebene Verfahrräder (7) und ein nicht angetriebenes, mitlaufendes Passivrad (8) aufweist, wobei weiter Korrektur-Maßnahmen zur Rückgewinnung der freien Beweglichkeit des Aufsammelgerätes (1) auslösbar sind im Falle, dass eine Bewegungshinderung des Aufsammelgerätes (1) von diesem erkannt wird, **dadurch gekennzeichnet, dass** das Passivrad (8) hinsichtlich seiner Bewegung überwacht wird zur möglichen Einleitung einer Korrektur-Maßnahme bei einer Unterschreitung einer vorgegebenen Grenzgeschwindigkeit, wobei die Korrektur-Maßnahme sein kann, dass das Bodenstaub-Aufsammelgerät (1) zunächst die Fahrt stoppt und hiernach einen geeigneten Befreiungsalgorithmus startet oder eine Umkehr des Fahrmanövers, welches zum Festfahren geführt hat, durchführt oder ein Freischaukeln, etwa durchalternierende Drehungen und Fahrbewegungen, durchführt oder ein Anheben des Aufsammelgerätes bei einem Auffahren bzw. ein Absenken des Aufsammelgerätes bei einem Unterfahren durchführt.

2. Bodenstaub-Aufsammelgerät nach Anspruch 1, **dadurch gekennzeichnet, dass** die Bewegung des Passivrades (8) mechanisch überwacht wird.

3. Bodenstaub-Aufsammelgerät nach Anspruch 1, **dadurch gekennzeichnet, dass** die Bewegung des Passivrades (8) optisch überwacht wird.

4. Bodenstaub-Aufsammelgerät nach Anspruch 1, **dadurch gekennzeichnet, dass** die Bewegung des Passivrades (8) magnetisch überwacht wird.

## Claims

1. Self-propelled floor-dust collector (1) comprising an electric motor drive, a dust-collection container and a covering hood (3), the collector (1) comprising one or more driven travelling wheels (7) and a non-driven passive wheel (8) moving together therewith, it being possible to prompt additional corrective measures for recovering the freedom of movement of the collector (1) when an obstruction to the movement of the collector (1) is detected by same, **characterised in that** the passive wheel (8) is monitored in terms of the movement thereof in order to possibly introduce a corrective measure if said movement falls below a limiting speed, it being possible for the corrective measure to be that the floor-dust collector (1) initially stops the travel and subsequently starts a suitable release algorithm, or performs a reverse of the travel manoeuvre that led to it getting stuck, or rocks free, for instance by means of alternating rotations and travel motions, or lifts the collector when travelling over something or lowers the collector when travelling below something.

2. Floor-dust collector according to claim 1, **characterised in that** the movement of the passive wheel (8) is monitored mechanically.

3. Floor-dust collector according to claim 1, **characterised in that** the movement of the passive wheel (8) is monitored visually.

4. Floor-dust collector according to claim 1, **characterised in that** the movement of the passive wheel (8) is monitored magnetically.

## Revendications

1. Appareil de collecte de poussière au sol à déplacement autonome (1), comprenant un entrainement par moteur électrique, un récipient de collecte de poussière et un capot de recouvrement (3), dans lequel l'appareil de collecte (1) comprend une ou plusieurs roues motrices de déplacement (7) et une roue passive non-motrice suiveuse (8), dans lequel en outre peuvent être déclenchées des mesures correctrices pour recouvrir la liberté de déplacement de l'appareil de collecte (1) dans le cas où un obstacle au déplacement de l'appareil de collecte (1) est reconnu par celui-ci, **caractérisé en ce que** la roue passive (8) est surveillée en ce qui concerne son déplacement pour le déclenchement éventuel d'une mesure correctrice en cas de passage sous une vitesse de rotation limite prédéterminée, dans lequel la mesure correctrice peut être que l'appareil de collecte de poussière au sol (1) d'abord arrête le déplacement et puis lance un algorithme de libération approprié ou exécute une inversion de la manoeuvre de déplacement qui a conduit au blocage ou exécute un balancement de libération grosso modo par des pivotements en alternance et des mouvements de déplacement ou exécute un soulèvement de l'appareil de collecte en cas de passage sur un obstacle ou un abaissement de l'appareil de collecte en cas de passage sous un obstacle.

2. Appareil de collecte de poussière au sol selon la revendication 1, **caractérisé en ce que** le déplacement de la roue passive (8) est surveillé mécaniquement.

3. Appareil de collecte de poussière au sol selon la revendication 1, **caractérisé en ce que** le déplacement de la roue passive (8) est surveillé optiquement.

4. Appareil de collecte de poussière au sol selon la revendication 1, **caractérisé en ce que** le déplacement de la roue passive (8) est surveillé magnétiquement.
